**Europäisches Patentamt**

**European Patent Office**

**Office européen des brevets**

(19)

(11) Veröffentlichungsnummer: **0 620 239 A1**

## (12) EUROPÄISCHE PATENTANMELDUNG

(21) Anmeldenummer: **94103935.6**

(22) Anmeldetag: **14.03.94**

(51) Int. Cl.5: **C08G 63/49**

(30) Priorität: **15.03.93 DE 4308188**

(43) Veröffentlichungstag der Anmeldung:
**19.10.94 Patentblatt 94/42**

(84) Benannte Vertragsstaaten:
**AT BE DE DK ES FR GB IT NL SE**

(71) Anmelder: **Ashland-Südchemie-Kernfest GmbH**
**Reisholzstrasse 16**
**D-40721 Hilden (DE)**

(72) Erfinder: **Winter, Reinhard**
**Maikammer 14**
**D-42489 Wülfrath (DE)**
Erfinder: **Kuhlmann, Peter, Dr.**
**Zwingenbergerweg 46**
**D-42489 Wülfrath (DE)**

(74) Vertreter: **VOSSIUS & PARTNER**
**Siebertstrasse 4**
**D-81675 München (DE)**

(54) **Epoxymodifizierte Alkydharze, Verfahren zu ihrer Herstellung und ihre Verwendung als wasserverdünnbare Bindemittel.**

(57) Die vorliegende Anmeldung betrifft wasseremulgierbare Alkydharze, die durch Umsetzung eines Alkydharzes mit einem Epoxid erhältlich sind und die gegebenenfalls anschließend neutralisiert werden. Die Umsetzung mit dem Epoxid wird vorzugsweise in Gegenwart einer Fettsäure durchgeführt.

EP 0 620 239 A1

Die Erfindung betrifft epoxymodifizierte Alkydharze, ein Verfahren zu ihrer Herstellung und ihre Verwendung als wasserverdünnbare Bindemittel. Ferner wird erfindungsgemäß ein Verfahren zur Herstellung dieser wasserverdünnbaren Bindemittel, insbesondere Lackbindemittel und ihre Verwendung in oxidativ trocknenden, wasserverdünnbaren Lacken beschrieben.

Wasserverdünnbare Lacke haben aufgrund ökologischer Probleme und dem damit verbundenem Zwang zur Reduzierung von Lösungsmittelemission in den letzten Jahren weite Verbreitung gefunden und haben in vielen Bereichen die lösungsmittelhaltigen Anstriche ersetzt.

Im Bereich der Luft- und forciert trocknenden Systemen werden bisher einerseits physikalisch trocknende Polymerisatdispersionen und zum anderen oxidativ trocknende Alkydharze eingesetzt.

Die meisten dieser Formulierungen enthalten noch mehr oder weniger große Lösungsmittelmengen, die zur Filmbildung, als Koaleszenzmittel zur Emulgierung oder Lösung erforderlich sind. Außerdem entsprechen die lacktechnischen Eigenschaften in den meisten Fällen noch nicht denen vergleichbarer Lösungsmittelsysteme.

Die Polymerdispersionen zeigen aufgrund ihrer Thermoplastizität starke Blockneigung und neigen bei Sonneneinstrahlung zu mehr oder weniger starker Verschmutzung. Auch bezüglich der Verarbeitbarkeit, dem Glanz und der Fülle sind die Polymerisatsysteme den Lösungsmittelsystemen unterlegen.

Mit Wasser verdünnbaren, oxidativ trocknenden Alkydharzsystemen lassen sich diese Schwächen weitgehend beseitigen. Außerdem zeigen die Alkydharzformulierungen meist besseres Korrosionsschutzverhalten als die Polymerdispersionen.

Wasserverdünnbare Alkydharzsysteme lassen sich prinzipiell auf zwei Arten herstellen:
1. Durch Emulgierung von konventionellen Alkyden mittels Emulgatoren in Wasser.
2. Durch Einbau von hydrophilen Bestandteilen, wie z.B. Säuregruppen oder Hydroxylgruppen in das Molekül, wodurch man zu selbst emulgierenden Typen kommt. Diese Formulierungen werden üblicherweise mit Ammoniak oder Aminen neutralisiert.

Die Emulsionen des ersten Typs enthalten fast immer Restlösungsmittel, die zur Emulgierung erforderlich sind. Außerdem bleiben die Emulgatoren im Film und bewirken dort eine hohe Wasseraufnahme und Quellung, wodurch die Korrosionsschutzwirkung stark verschlechtert wird.

Die Alkydsysteme des zweiten Typs werden meist mit Säurezahlen von 30 bis 70 mg KOH/g hergestellt und nach Neutralisation mit Aminen und Zusatz von wassermischbaren Lösungsmitteln in Wasser gelöst oder emulgiert. Diese Typen von Alkydharzen weisen jedoch häufig eine relativ geringe Hydrolysebeständigkeit auf.

Zur Verbesserung der Hydrolysebeständigkeit sowie der Erhöhung der Filmhärte und der Verringerung der Vergilbungsneigung werden die im Alkydharz befindlichen Fettsäurereste mit ungesättigten Monomeren, wie z.B. Acrylsäureestern, Methacrylsäureestern oder Vinylmonomeren copolymerisiert. Dieses wird z.B. in der EP-A-0267562 beschrieben. Aber auch Harzemulsionen dieses Typs enthalten noch Cosolventien. Außerdem wird zur Emulgierung dieser Alkydharze ein hoher Amin- oder Ammoniaküberschuß benötigt, der sich durch einen mehr oder weniger kräftigen unangenehmen Fischgeruch bemerkbar macht.

In der US-Patentschrift US-A-3 442 835 werden wasseremulgierbare Alkydharze beschrieben, die im Säurezahlbereich von 5 bis 30 mg KOH/g liegen und durch Einkondensation von Polyglykolen wasseremulgierbar wurden. Nach diesem Verfahren lassen sich bereits im pH-Bereich 7 stabile Emulsionen herstellen, die keinerlei Lösungsmittel enthalten. Durch Modifikation mit Isocyanaten läßt sich die Härte, die Trocknung und die Verseifungsbeständigkeit verbessern. Die US-Patentschrift US-A-3 639 315 beschreibt die Modifikation dieser Harzemulsionen mit Isocyanaten, wodurch eine größere Härte, eine schnellere Trocknung und eine erhöhte Verseifungsbeständigkeit erzielt wird.

Vorstehende Harzemulsionen zeichnen sich durch Geruchsarmut, gute Verarbeitungseigenschaften und zufriedenstellende Korrosionsschutzwirkung aus. Häufig besteht jedoch Bedarf nach wäßrigen Systemen, die eine verbesserte Korrosionsschutzwirkung sowie eine verbesserte Haftung auf Metallen zur Verfügung stellen können.

Das technische Problem der vorliegenden Anmeldung ist somit das Zurverfügungstellen von in Wasser emulgierbaren Alkydharzen, die derart modifiziert sind, daß sie gegenüber den Harzen des Standes der Technik eine verbesserte Korrosionsschutzwirkung sowie eine verbesserte Haftung auf Metallen ermöglichen.

Erfindungsgemäß wird dieses Problem durch emulgierbare Alkydharze gelöst, die mit Epoxidharzen umgesetzt wurden. Vorzugsweise findet die Umsetzung mit den Epoxidharzen in Gegenwart von Fettsäuren statt. Die Reaktionsprodukte zeigen Säurezahlen von 3 bis 30 mg KOH/g, vorzugsweise 8 bis 20 mg KOH/g und sind nach Neutralisation wasseremulgierbar. Zur Emulgierung sind keinerlei zusätzliche Lösungsmittel erforderlich. Außerdem zeigen die erfindungsgemäßen Emulsionen sehr gute Lagerstabilität. Die Produkte eignen sich hervorragend zur Formulierung von Grundierungen bzw. von Maler- und Industrielacken.

2

EP 0 620 239 A1

Das erfindungsgemäß eingesetzte Alkydharz (Basisalkydharz) wird wie in der Alkydharzchemie üblich durch Veresterung oder Umesterung aus natürlichen Ölen, Fettsäuren, Carbonsäuren, Polyalkoholen sowie Polyglykolen bei Temperaturen von 180 bis 260°C hergestellt. Die Reaktion wird bis zu einer Säurezahl von 3 bis 80 mg KOH/g durchgeführt. Anschließend werden zur Modifizierung gemäß der Erfindung 3 bis 30 Gew.-%, vorzugsweise 4 bis 15 Gew.-% Epoxidharz sowie 0 bis 20 Gew.-%, vorzugsweise 0 bis 10 Gew.-% Fettsäure, bezogen auf die Gesamtmenge, zugesetzt. Dabei werden die gleichen Fettsäuren verwendet, die zur Herstellung des Basisalkydharzes verwendet werden können. Das Reaktionsgemisch wird bis zur Säurezahl von 3 bis 30 mg KOH/g, vorzugsweise 8 bis 20 mg KOH/g umgesetzt, wobei das eingesetzte Epoxidharz mit dem Basisalkydharz reagiert.

Das erfindungsgemäß verwendete Basisalkydharz enthält vorzugsweise 10 bis 70 Gew.-%, insbesondere 20 bis 45 Gew.-% einer Öl- oder Fettsäurekomponente, 10 bis 35 Gew.-%, insbesondere 10 bis 30 Gew.-% eines mehrwertigen Alkohols mit 2 bis 6 Hydroxylgruppen, 3 bis 15 Gew.-%, insbesondere 3 bis 8 Gew.-% eines Polyetherpolyols mit einem Molekulargewicht von 400 bis 8000, insbesondere 1000 bis 6000, 0 bis 25 Gew.-%, insbesondere 10 bis 20 Gew.-% einer einbasigen Carbonsäure mit 6 bis 18 Kohlenstoffatomen und 10 bis 35 Gew.-%, insbesondere 15 bis 30 Gew.-% einer Dicarbonsäure mit 4 bis 10 Kohlenstoffatomen oder deren Anhydrid.

In einer Ausführungsform der vorliegenden Erfindung wird die Öl- oder Fettsäurekomponente, das Polyetherpolyol, die einbasige Carbonsäure und 40 bis 100 Gew.-% des eingesetzten, mehrwertigen Alkohols gemischt und auf eine Temperatur von etwa 180 bis 260°C, vorzugsweise 240 bis 250°C erhitzt, bis der gewünschte Umesterungsbereich erreicht ist. Der Umesterungsgrad kann wie in der Alkydchemie üblich über die Alkoholmischbarkeit kontrolliert werden. Der verbleibende mehrwertige Alkohol und die gesamte Dicarbonsäure oder ihr Anhydrid werden zugegeben und das erhaltene Gemisch wird auf 180 bis 260°C, vorzugsweise 240 bis 250°C erhitzt, bis das Gemisch eine Säurezahl von 3 bis 80 mg KOH/g aufweist.

Falls als Öl- oder Fettsäurekomponente ein natürlich vorkommendes Öl verwendet wird, wird vorstehende schrittweise Zugabe des mehrwertigen Alkohols bzw. der Dicarbonsäure bevorzugt. Für den Fall, daß die Öl- oder Fettsäurekomponente in situ aus Vorstufen, z.B. Fettsäure und Triol, gebildet wird, ist ein Eintopfverfahren bevorzugt.

Als Öl- oder Fettsäurekomponente werden bevorzugt trocknende Öle oder Fettsäuren trockender Öle verwendet. Die erfindungsgemäß verwendeten trocknenden Öle umfassen alle natürlich vorkommenden Öle, die üblicherweise bei der Herstellung von Alkydharzen verwendet werden. Der Ausdruck "trocknendes Öl" bedeutet dabei ein ungesättigtes Triglycerid von Fettsäuren, die üblicherweise 10 bis 24 Kohlenstoffatome pro Molekül besitzen.

Geeignete trocknende Öle schließen pflanzliche Öle, wie Baumwollsamenöl, Maisöl, Sojaöl, Safloröl, Tungöl, Holzöl Sonnenblumenöl, Oiticikaöl, Rüböl, Leinsamenöl, Perillaöl, Mohnsamenöl, Tallöl, Ricineenöl, dehydriertes Ricinusöl oder geblasenes Ricinusöl, und Fischöle, wie Heringstran, Menhadentran, Kabeljauöl, Walöl und ihre Gemische ein.

Als Öl- oder Fettsäurekomponente werden bevorzugt trocknende Öle oder Fettsäuren trocknender Öle mit Jodzahlen im Bereich von 140 bis 180 wie Leinöl, Sojaöl, Sonnenblumenöl, Holzöl, Ricineenöl, eingesetzt.

Die erfindungsgemäß verwendete Menge Öl kann von etwa 10 bis etwa 70 Gew.-%, vorzugsweise von etwa 15 bis etwa 40 Gew.-% des Endprodukts variieren.

Der Ausdruck trocknende Öle schließt auch Ester ungesättigter Fettsäuren mit 10 bis 24 Kohlenstoffatomen mit Triolen, wie Trimethylolethan, Trimethylolpropan ein, wobei das Molverhältnis von Fettsäure zu Triol 3:1 beträgt. Gemäß der vorliegenden Erfindung können trocknende Öle als solche oder esterbildende Vorstufen, wie Fettsäuren und Triole eingesetzt werden, wobei der Ester in situ gebildet wird. Ferner können Gemische verschiedener trocknender Öle als Öl- oder Fettsäurekomponente eingesetzt werden.

Die einbasige Carbonsäure, die erfindungsgemäß verwendet wird, besitzt etwa 6 bis etwa 18 Kohlenstoffatome pro Molekül und schließt gesättigte aliphatische Säuren, gesättigte cycloaliphatische Säuren und aromatische Säuren ein. Typische Beispiele sind Isodecansäure, Isooctansäure, Cyclohexansäure, Cyclopentansäure, Benzoesäure, p-tert.-Butylbenzoesäure und langkettige Fettsäuren, abgeleitet von Stoffen, wie Kokosnußöl, Palmkernöl, Babassuöl und anderen auf dem Fachgebiet bekannten Fetten und Ölen. Ebenso können Gemische dieser Säuren verwendet werden. Vorzugsweise werden Benzoesäure und p-tert.-Butylbenzoesäure verwendet. Die Menge der erfindungsgemäß verwendeten Säuren beträgt etwa 0 bis etwa 25 Gew.-%, vorzugsweise etwa 10 bis etwa 20 Gew.-% des Basisalkydharzes.

Die erfindungsgemäß verwendeten Dicarbonsäuren oder ihre Anhydride besitzen 4 bis 10 Kohlenstoffatome pro Molekül und schließen aliphatische, cycloaliphatische und aromatische Dicarbonsäuren und ihre Anhydride ein. Beispiele für diese Säuren bzw. Anhydride sind Terephthalsäure, Isophthalsäure, Adipinsäure, Glutarsäure, Azelainsäure und Phthalsäure bzw. die Anhydride dieser Verbindungen. Die Mengen, die erfindungsgemäß verwendet werden, betragen etwa 10 bis etwa 35 Gew.-%, vorzugsweise etwa 15 bis etwa 30 Gew.-% des Basisalkydharzes. Besonders bevorzugt werden Isophthalsäure und Adipinsäure als Dicarbonsäure bzw. Anhydrid verwendet.

Die erfindungsgemäß verwendeten mehrwertigen Alkohole besitzen wenigstens 2, jedoch nicht mehr als 6 Hydroxylgruppen pro Molekül und 2 bis 8 Kohlenstoffatome. Beispiele dieser mehrwertigen Alkohole schließen Ethylenglykol, Diethylenglykol, Glycerin, Trimethylolethan, Trimethylolpropan, Pentaerythrit, Dipentaerythrit, Sorbitol, Mannitol und ähnliche mehrwertige Alkohole, die zur Herstellung von Alkydharzen verwendet werden können, ein. Gemische dieser mehrwertigen Alkohole können verwendet werden. Besonders bevorzugte mehrwertige Alkohole sind Glycerin, Pentaerythrit und Trimethylolpropan.

Wenn als trocknendes Öl erfindungsgemäß ein natürlich vorkommendes Triglycerid verwendet wird, wird der mehrwertige Alkohol vorzugsweise bei der Herstellung des Basisalkydharzes in zwei Portionen zugegeben. Die Gesamtmenge des verwendeten mehrwertigen Alkohols liegt bei etwa 10 bis etwa 35 Gew.-%, vorzugsweise etwa 10 bis etwa 30 Gew.-% des Basisalkydharzes. Vorzugsweise werden bei der ersten Zugabe etwa 60 % des gesamten mehrwertigen Alkohols verwendet. Dies sind in etwa 6 bis etwa 21 Gew.-% des Basisalkydharzes. Bei der zweiten Zugabe wird der Rest des mehrwertigen Alkohols verwendet, also etwa 4 bis etwa 15 Gew.-% des Basisalkydharzes.

Zur besseren Emulgierbarkeit werden in das Basisalkydharz etwa 3 bis etwa 15 Gew.-%, vorzugsweise etwa 3 bis etwa 8 Gew.-% Polyetherpolyole, wie Polyethylenglykol, Polypropylenglykol oder Polytetrahydrofuran einkondensiert. Vorzugsweise besitzen die erfindungsgemäß verwendeten Polyoxyethylenglykole eine lange Kette wiederkehrender Oxyethyleneinheiten mit einer Hydroxylgruppe an jedem Ende der Kette. Das bevorzugte mittlere Molekulargewicht der verwendeten Polyglykole beträgt etwa 400 bis etwa 8000, vorzugsweise etwa 1000 bis etwa 6000.

Das aus vorstehenden Ausgangsprodukten durch Veresterung oder Umesterung, wie in der Alkydharzchemie üblich, hergestellte Basisalkydharz wird auf eine Säurezahl von 3 bis 80 mg KOH/g eingestellt. Bezogen auf die Gesamtmenge werden dann 3 bis 30 Gew.-%, vorzugsweise 4 bis 15 Gew.-% Epoxidharz, sowie 0 bis 20 Gew.-%, vorzugsweise 0 bis 10 Gew.-% Fettsäure zugesetzt und das Reaktionsgemisch wird bis zu einer Säurezahl von 3 bis 30 mg KOH/g, vorzugsweise 8 bis 20 mg KOH/g umgesetzt. Die erfindungsgemäßen wasseremulgierbaren Alkydharze enthalten vorzugsweise 2 bis 15 % Polyetherpolyole mit einem Molekulargewicht von 400 bis 8000. Ferner besitzen sie eine Öllänge von 10 bis 70 %, was einem Fettsäuregehalt im Bereich von 7 bis 60 % entspricht.

Die bevorzugt einsetzbaren Epoxidharze sind Reaktionsprodukte aus Bisphenol A und Epichlorhydrin (Bisphenol A Epoxidharze) oder Bisphenol F und Epichlorhydrin (Bisphenol F Epoxidharze) oder deren Gemische mit einem Epoxyäquivalentgewicht von 130 bis 4000, vorzugsweise von 160 bis 2000. Außerdem sind epoxidierte Novolake, aliphatische Mono- und Diepoxide, wie z.B. Butylglycidylether, Hexylglycidylether, 2-Ethylhexylglycidylether, 1,6-Hexandioldiglycidylether, 1-Epoxyethyl-3,4-epoxycyclohexan, Polyethylenglycoldiglycidylether, Polypropylenglycoldiglycidylether; aromatische Epoxide, wie z.B. Phenylglycidylether, p-t-Butylphenylglycidylether, Phenylendiglycidylether sowie epoxidierte Öle, wie z.B. epoxidiertes Sojaöl oder epoxidiertes Leinöl einsetzbar.

Besonders bevorzugt sind Epoxidharze vom Typ Bisphenol A oder Bisphenol F mit einem Epoxidäquivalentgewicht von 160 bis 2000. Der Anteil des Epoxidharzes am Wasser emulgierbaren Alkydharz beträgt 3 bis 30 Gew.-%, vorzugsweise 5 bis 20 Gew.-%.

Überraschenderweise lassen sich die erfindungsgemäßen Epoxid-modifizierten Alkydharze ohne jeglichen Zusatz von Solventien oder Cosolventien und Emulgatoren, sowie ohne Aminüberschuß in Wasser emulgieren. Um die Trocknungsgeschwindigkeit und die Härte nochmals deutlich zu verbessern, können die erfindungsgemäßen, epoxymodifizierten Alkydharzemulsionen entsprechend der US-Patentschrift US-A-3 639 315 mit Isocyanaten umgesetzt werden.

Zur Isocyanatmodifizierung können Mono-, Di- oder Triisocyanate eingesetzt werden. Beispiele für die erfindungsgemäß verwendeten Isocyanate schließen Toluol-2,4-diisocyanat, Toluol-2,6-diisocyanat, 3-Phenyl-2-ethylendiisocyanat, 1,5-Naphthalindiisocyanat, Cumol-2,4-diisocyanat, 4-Methoxy-1,3-diphenyldiisocyanat, 4-Chlor-1,3-phenyldiisocyanat, Diphenylmethan-4,4'-diisocyanat, Diphenylmethan-2,4'-diisocyanat, Diphenylmethan-2,2'-diisocyanat, 4-Brom-1,3-phenyldiisocyanat, 4-Ethoxy-1,3-phenyldiisocyanat, 2,4'-Diisocyanatodiphenylether, 5,6-Dimethyl-1,3-phenyldiisocyanat, 2,4-Dimethyl-1,3-phenyldiisocyanat, 4,4'-Diisocyanatodiphenylether, 4,6-Dimethyl-1,3-phenyldiisocyanat, 9,10-Anthracendiisocyanat, 2,4,6-Toluoltriisocyanat, 2,4,4'-Triisocyanatodiphenylether, 1,4-Tetramethylendiisocyanat, 1,6-Hexamethylendiisocyanat, 1,10-Decamethylendiisocyanat, 1,3-Cyclohexylendiisocyanat, 4,4'-Methylen-bis(cyclohexylisocyanat), Xyloldiisocyanat, 1-Isocyanato-3-methylisocyanato-3,5,5-trimethylcyclohexan (Isophorondiisocyanat), 1,3-Bis(isocyanato-1-methylethyl)-benzol (m-TMXDI), 1,4-Bis(isocyanato-1-methylethyl)benzol (p-TMXDI) ein. Bevorzugt werden

4

Toluol-2,4-diisocyanat, Toluol-2,6-diisocyanat, Diphenylmethan-4,4'-diisocyanat, Diphenylmethan-2,4'-diisocyanat, Diphenylmethan-2,2'-diisocyanat, 1,6-Hexamethylendiisocyanat und Isophorondiisocyanat erfindungsgemäß eingesetzt. Die Umsetzung mit Isocyanat erfolgt üblicherweise im Temperaturbereich von 10° bis 70°C, vorzugsweise 20° bis 50°C.

Überraschenderweise sind die erfindungsgemäß beanspruchten epoxymodifizierten Alkydharze im Gegensatz zu bisher bekannten Epoxyestern und epoxymodifizierten Alkydharzen nach Neutralisation mit Ammoniak oder Aminen ohne Zusatz von Lösungsmitteln in Wasser emulgierbar. Ähnliche epoxymodifizierte Harze aus dem Stand der Technik, wie z.B. Epoxyester, enthalten üblicherweise noch große Mengen von Cosolventien, wie z.B. Butylglykol oder andere Alkohole, um eine Wasserverträglichkeit zu erreichen.

Die Neutralisation der erfindungsgemäß hergestellten Alkydharze kann durch Zugabe einer kleinen Menge eines Neutralisierungsmittels erreicht werden, wobei ein Teil oder alle Säuregruppen im Harz neutralisiert werden. Im allgemeinen ist es ausreichend, 20 bis 100 %, vorzugsweise 50 bis 90 % der theoretisch vorhandenen Säuregruppen im Harz zu neutralisieren. Das Harz wird dann auf eine gewünschte Viskosität in Wasser eingestellt, wobei eine wäßrige Dispersion mit 5 bis 55 Gew.-%, vorzugsweise 25 bis 55 Gew.-% Harzfeststoff (nicht flüchtig) erhalten wird, die dann auf übliche Weise in Lacke auf Wasserbasis oder eine ähnliche Zusammensetzung durch Zugabe geeigneter emulgierbarer Trocknungsstoffe, z.B. Mangan oder Kobalt und Pigmenten, z.B. Zinkoxid, Titandioxid, Calciumcarbonat weiterverarbeitet wird.

Geeignete Neutralisationsmittel, die erfindungsgemäß verwendet werden können, schließen Ammoniak, Ammoniumhydroxid und primäre, sekundäre und tertiäre Mono- oder Polyamine, einschließlich Hydroxyamine und insbesondere niedere Alkylamine ein, wie Ethylamin, Butylamin, Dimethylamin, Diethylamin, Dimethylethylamin, Dimethylisopropylamin, Diethanolamin, Triethanolamin, Aminopropanol, Dimethylaminopropanol, Tributylamin, Triethylamin, Triisopropanolamin, Ethanolamin, Dimethylethanolamin oder Butanolamin. Amine die bei Temperaturen unter 180°C, vorzugsweise 120°C flüchtig sind, sind bevorzugt. Besonders bevorzugte Amine sind Ammoniak, Triethylamin, Dimethylethylamin, Dimethylisopropylamin, Dimethylethanolamin, Ethanolamin, Diethanolamin, Triethanolamin, Aminopropanol oder Dimethylaminopropanol. Die Amine können in unverdünnter Form zugegeben werden, wobei im wesentlichen wasserfreie neutralisierte Harzprodukte erhalten werden, die praktisch unbegrenzt in Wasser verdünnt oder dispergiert werden können. Alternativ können die Harze durch Zugabe einer wäßrigen Lösung oder Dispersion von Aminen neutralisiert werden. Ebenso können anorganische Neutralisationsmittel, wie Kalium- oder Natriumhydroxid oder Carbonate verwendet werden. Auch Gemische von Neutralisierungsmitteln können verwendet werden.

Die erfindungsgemäß hergestellten Harzemulsionen zeigen, wenn sie als wasserverdünnbare Bindemittel verwendet werden, eine deutlich verbesserte Haftung auf verschiedensten Untergründen, insbesondere auf Metallen, deutlich verbesserte Korrosionsschutzwirkung und eine schnellere Trocknung und Entwicklung der Wasserfestigkeit.

Die erfindungsgemäß hergestellten Bindemittel können in üblicher Weise zu pigmentierten oder unpigmentierten Lacken weiter verarbeitet werden. Die erfindungsgemäßen Bindemittel können übliche Additive, wie Siccative, Antischaummittel, Netzmittel, Konservierungsstoffe usw. enthalten. Die aus dem erfindungsgemäßen Bindemittel hergestellten Lacke werden bevorzugt bei Raumtemperatur oder im Falle der forcierten Trocknung im Temperaturbereich bis ca. 120°C getrocknet. In Kombination mit wäßrigen Vernetzerharzen, wie z.B. Harnstoff, Melamin- oder Phenolharzen, sind aber auch Einbrennlacke herstellbar. Die folgenden Beispiele erläutern die Erfindung.

## Tabelle 1

### Beispiele 1 bis 7

| Beispiel | | 1 | 2 | 3 | 4 | 5 | 6 | 7 |
|---|---|---|---|---|---|---|---|---|
| A | Sojaöl | 12,5 | 15,5 | 10,0 | 10,0 | 10,0 | - | 10,0 |
| B | Sonnenblumenöl | - | - | - | - | - | 10,0 | - |
| C | Polyethylenglykol | 3,0 | 2,5 | 2,4 | 2,4 | 2,4 | 2,4 | 2,4 |
| D | p.-tert.-Butylbenzoesäure | 7,5 | 7,5 | 7,2 | 7,2 | 7,2 | 7,2 | 7,2 |
| E | Pentaerithrit | 7,0 | 6,0 | 6,0 | 6,0 | 6,0 | 6,0 | 6,0 |
| F | Phthalsäureanhydrid | 9,0 | 8,5 | 8,0 | 8,0 | 8,0 | 8,0 | 8,0 |
| G | Isophthalsäure | 3,0 | 3,0 | 2,9 | 2,9 | 2,9 | 2,9 | 2,9 |
| H | Pentaerithrit | 4,0 | 3,5 | 3,5 | 3,5 | 3,5 | 3,5 | 3,5 |
| I | Epoxidharz 1 | 2,5 | 2,0 | - | - | - | - | - |
| J | Epoxidharz 2 | - | - | - | - | - | - | - |
| K | Leinölfettsäure | 1,5 | 1,5 | 1,0 | 1,0 | 1,0 | 1,0 | 1,0 |
| L | Triethylamin | 0,3 | 0,3 | 0,3 | 0,3 | 0,3 | 0,3 | - |
| M | Aminopropanol | - | - | - | - | - | - | 0,2 |
| N | Wasser | 49,7 | 49,7 | 55,2 | 53,2 | 53,2 | 53,2 | 53,3 |
| O | Isophorondiisocyanat | - | - | - | - | 2,0 | 2,0 | 2,0 |
| P | Toluidendiisocyanat | - | - | - | 2,0 | - | - | - |

Epoxidharz 1 = Diglycidylether auf Basis Bisphenol A / Epoxidäquivalentgewicht 190 g/val

Epoxidharz 2 = Diglycidylether auf Basis Bisphenol A / Epoxidäquivalentgewicht 450 g/val

Die in Tabelle I beschriebenen Alkydharze wurden auf die folgende Weise hergestellt:

Die Komponenten A, B, C, D und E wurden in einem geeigneten Reaktionsgefäß 3 Stunden bei 240 °C umgeestert. Dann wurden die Komponenten F, G und H zugesetzt und solange verestert, bis eine Säurezahl von 20 mg KOH/g erreicht wurde. Danach wurden das Epoxidharz I oder J und die Leinölfettsäure K zugesetzt und weiter bis zu einer Säurezahl von <15 mg KOH/g verestert.

Nach Neutralisation mit dem Amin L oder M wurden die Alkydharze in Wasser N emulgiert. Die eventuelle Modifikation mit dem Isocyanat O oder P wurde bei einer Temperatur von 30°C durchgeführt. Der Feststoffgehalt der Emulsion wurde auf 43 % eingestellt.

**Vergleichsbeispiel**

125 g Sojaöl, 30 g Polyethylenglykol, 75 g p-tert.-Butylbenzoesäure und 70 g Pentaerythrit wurden 3 Stunden bei 240°C umgeestert. Dann wurden 90 g Phthalsäureanhydrid, 30 g Isophthalsäure und 40 g Pentaerythrit zugesetzt und solange verestert, bis eine Säurezahl von 15 mg KOH/g erreicht wurde. Nach Neutralisation mit 3 g Triethylamin wurde das Basisharz in 537 g destilliertem Wasser emulgiert und der Feststoffgehalt wurde auf 43 % eingestellt.

Die beschriebenen Harze wurden in Korrosionsschutzgrundierungen nach folgender Rezeptur geprüft:

109 g Titandioxid
109 g Zinkphosphat
109 g Schwerspat
120 g Talkum
543 g Alkydemulsion (Feststoffgehalt, eingestellt auf 43 %)
10 g Siccativgemisch auf Cobalt- und Zirkonbasis

Die Lacke wurden auf einem entfetteten Stahlblech mit einer Trockenschichtstärke von 75 $\mu$m aufgebracht. Nach einer Woche Trockenzeit wurde die Haftung mit Gitterschnitt DIN 53151, Elastizität mit der Erichsentiefung (DIN 53156) und die Korrosionsschutzwirkung über den Salzsprühtest nach DIN 50021 geprüft.

Die Tabelle II gibt deutlich die Vorteile der erfindungsgemäßen Harze gegenüber dem Harz des Vergleichsbeispiels wieder.

7

Tabelle 2

| | Vergleichs-Beispiel | Beispiele | | | | | | |
|---|---|---|---|---|---|---|---|---|
| | | 1 | 2 | 3 | 4 | 5 | 6 | 7 |
| Trockenzeit griffest nach | 3 h | 2 h | 3 h | 2 h | 30 min | 45 min | 50 min | 45 min |
| Erichsentiefung | 4,5 mm | 6,5 mm | 8 mm | 8,2 mm | 7 mm | 7,4 mm | 7,6 mm | 7,3 mm |
| Salzsprühtest 240h Unterrostung in mm am Kreuzschnitt | 3-5 mm | 0 mm | 0 mm | 0 mm | 0 mm | 0 mm | 0 mm | 0 mm |
| Haftung Gitterschnitt | GT 3 | GT 0 | GT 0 | GT 0 | GT 0 | GT 0 | GT 0 | GT 0 |

**Patentansprüche**

1. Wasseremulgierbares Alkydharz, erhältlich durch Umsetzung eines Alkydharzes mit einem Epoxid und gegebenenfalls anschließende Neutralisierung.

2. Wasseremulgierbares Alkydharz nach Anspruch 1, dadurch gekennzeichnet, daß die Umsetzung in Gegenwart einer Fettsäure durchgeführt wird.

3. Wasseremulgierbares Alkydharz nach einem der Ansprüche 1 oder 2, dadurch gekennzeichnet, daß das eingesetzte Alkydharz aus einer Öl- oder Fettsäurekomponente, einem mehrwertigen Alkohol, einem Polyetherpolyol mit einem Molekulargewicht von 400 bis 8000, einer einbasigen Carbonsäure und einer Dicarbonsäure bzw. deren Anhydrid hergestellt wurde.

4. Wasseremulgierbares Alkydharz nach einem der Ansprüche 1 bis 3, dadurch gekennzeichnet, daß das eingesetzte Alkydharz eine Säurezahl von 3 bis 80 mg KOH/g aufweist.

5. Wasseremulgierbares Alkydharz nach einem der Ansprüche 1 bis 4, dadurch gekennzeichnet, daß das Äquivalentgewicht des Epoxids 130 bis 4000 beträgt.

6. Wasseremulgierbares Alkydharz nach einem der Ansprüche 1 bis 5, dadurch gekennzeichnet, daß das Alkydharz durch Umsetzung mit Isocyanat zusätzlich modifiziert ist.

7. Verfahren zur Herstellung eines wasseremulgierbaren Alkydharzes nach einem der Ansprüche 1 bis 6, dadurch gekennzeichnet, daß man ein Alkydharz mit einem Epoxid umsetzt, und gegebenenfalls das Umsetzungsprodukt neutralisiert.

8. Verfahren nach Anspruch 7, dadurch gekennzeichnet, daß das Alkydharz zusätzlich mit Isocyanat umgesetzt wird.

9. Bindemittel, umfassend ein wasseremulgierbares Alkydharz nach einem der Ansprüche 1 bis 6, das in Wasser emulgiert ist.

10. Verwendung eines wasseremulgierbaren Alkydharzes nach einem der Ansprüche 1 bis 6 zur Herstellung von pigmentierten oder unpigmentierten Lacken.

| Europäisches Patentamt | EUROPÄISCHER RECHERCHENBERICHT | Nummer der Anmeldung EP 94 10 3935 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|-----------|---------------------------------------------------------------------------------------|-------------------|------------------------------------------|
| A | EP-A-0 346 533 (NIPPON OIL AND FATS CO., LTD.) <br> * Seite 6, Zeile 14 - Zeile 31; Ansprüche * <br> * Seite 7, Zeile 4 - Zeile 17 * <br> --- | 1-10 | C08G63/49 |
| A | US-A-4 154 709 (R.UKITA ET AL.) <br><br> * Ansprüche 1,14-16; Beispiele 1,2 * <br> --- | 1-5,7,9, 10 | |
| A | DATABASE WPI <br> Week 7844, <br> Derwent Publications Ltd., London, GB; <br> AN 78-79288A <br> & JP-A-53 111 393 (HITACHI CHEMICAL KK) <br> 28. September 1978 <br> * Zusammenfassung * <br> --- | 1-3,9,10 | |
| A | PATENT ABSTRACTS OF JAPAN <br> vol. 11, no. 353 (C-457) 18. November 1987 <br> & JP-A-62 127 359 (NIPPON OIL & FATS CO LTD) 9. Juni 1987 <br> * Zusammenfassung * <br> --- | 1,4,7,9, 10 | |
| A | EP-A-0 113 801 (HENKEL KGAA) <br> * Ansprüche 1,3,8 * <br> --- | 1,4,9,10 | |
| D,A | US-A-3 639 315 (J.RODRIGUEZ) <br> * Ansprüche 1,2 * <br> ----- | 1,3,6,8 | |

**RECHERCHIERTE SACHGEBIETE (Int.Cl.5)**

C08G

Der vorliegende Recherchenbericht wurde für alle Patentansprüche erstellt

| Recherchenort | Abschlußdatum der Recherche | Prüfer |
|---------------|------------------------------|--------|
| BERLIN | 22. Juli 1994 | Angiolini, D |